# EUROPEAN PATENT APPLICATION

(11) **EP 4 600 823 A1**
(43) Date of publication of application: **13.08.2025**
(21) Application number: 24196561.5
(22) Date of filing: 27.08.2024
(51) Int. Cl.: G06F 9/50, G06F 9/54, G06F 16/25

(54) **DATABASE CONNECTION MANAGEMENT FOR INTEGRATION FLOWS IN A CLOUD ENVIRONMENT**

(30) Priority: 06.02.2024 US 202418433670
(71) Applicant: SAP SE, 69190 Walldorf (DE)
(72) Inventor: Dangi, Virendra Singh, 69190 Walldorf (DE); Dusad, Ankit, 69190 Walldorf (DE)
(74) Representative: Müller-Boré & Partner Patentanwälte PartG mbB

(57) **Abstract**

Various examples described herein are directed to an integration platform system. The integration platform system may comprise a database management system and an integration flow worker. The integration flow worker may comprise an integration flow data source and an internal data source. The integration flow worker may receive, from a first integration flow, a first connection request for the database management system. The integration flow worker may assign a first connection from the integration flow connection pool to the first integration flow. The integration flow worker may receive, from an internal service, a second connection request describing a second operation to be performed at the database management system and assigning a reserved connection to the internal service.

## Description

### BACKGROUND

An integration platform is a software application or set of software applications that is configured to integrate messaging between sets of different software applications. For example, an integration platform may receive messages sent by one software application, referred to as a sender component, and route the messages to another software application, referred to as a receiver component. The integration platform may perform various transformations on the messages from the sender component so that the messages may be successfully read and processed by the receiver component. In some examples, the integration platform is configured to poll the sending component to retrieve messages that are to be sent to the receiver component.

### BRIEF DESCRIPTION OF DRAWINGS

The present disclosure is illustrated by way of example and not limitation in the following figures.
FIG. 1 is a diagram showing one example of an environment comprising an integration platform, a database management system, and various sending and receiving software components.
FIG. 2 is a flowchart showing one example of a process flow that may be performed by an integration flow worker to process a connection request from an integration flow or internal service to access the database management system.
FIG. 3 is a flowchart showing one example of a process flow that may be executed by an integration flow worker upon receipt of a connection request from an integration flow.
FIG. 4 is a flowchart showing one example of a process flow that may be executed by an integration flow worker upon receipt of a connection request from an internal service.
FIG. 5 is a flowchart showing another example of a process flow that may be executed by an integration flow worker upon receipt of a connection request from an internal service.
FIG. 6 is a block diagram showing one example of an architecture for a computing device.
FIG. 7 is a block diagram of a machine in the example form of a computer system within which instructions may be executed for causing the machine to perform any one or more of the methodologies discussed herein.

### DETAILED DESCRIPTION

An integration platform, such as the SAP Cloud Integration product available from SAP SE of Walldorf, Germany, may be configured to perform various operations to facilitate the exchange of messages between one or more sender components and one or more receiver components. For example, an integration platform may be programmed to route messages from a sender component to a receiver component. The integration platform may also be programmed to transform messages from a format received from the sender component and to a format expected by the receiver component. In some examples, the integration platform may also manage the configurations of the sender system and/or the receiver system. For example, the integration platform may manage the sending component to configure a user account that is associated with a sent message, permissions associated with the sent message, messaging policies, and/or the like. The integration platform may also configure the receiver system, for example, by specifying endpoints for various messages, credentials to access the receiver system with the message, and/or the like.

Consider an example in which an enterprise operates a source system that generates and/or uses master data. The enterprise may wish to make the master data available to other destination systems. The enterprise may utilize the integration platform as a middleware to replicate the master data so that a new state defined by the master data is also updated on the destination systems. In some examples, an enterprise utilizes an integration platform to integrate between multiple sets of sending and receiving components. For example, an enterprise may desire to interface between software components for different tasks including, for example, different database components, different enterprise resource planning components, and/or the like. Each integration between a particular sending component or components and a particular receiving component or components may utilize a configuration that is specific to the combination of sending and receiving components.

In some examples, an integration platform may be implemented utilizing multiple integration flows. An integration flow may include a set of instructions executed by a runtime of the integration platform (e.g., an integration flow worker) to interface between at least one particular sender component and at least one particular receiver component. In some examples, integration flows are individually programmable and deployable based on the needs of the enterprise utilizing the integration platform (sometimes referred to herein as the user enterprise). In some examples, integration flows generated by the user enterprise are based on templates, instructions, and/or the like provided by the developer of the integration platform, also referred to herein as the integration platform developer.

In some examples, a number of integration flows are deployed by an integration flow worker. An integration flow worker is a runtime executing at a cloud environment or other system implementing the integration platform. Each integration flow worker may manage the execution of one or a set of integration flows.

In addition to implementing integration flows, an integration flow worker may also include various internal services that support the execution of the integration flows. Internal services may perform various tasks such as, for example, monitoring the execution status or health of the integration flow worker, tracking relationships between messages handled by the integration flow worker and messages handled by other integration flow workers, acquiring and releasing locks at a database management system, managing timers associated with various messages, managing number ranges associated with various messages, and/or the like.

Integration flow workers may utilize a database management system to store various data related to integrating messages, as described herein. To facilitate use of the database management system, the integration flow worker may implement one or more data sources including one or more pools of connections to the database management system.

Consider an example in which an integration flow is developed to facilitate an exchange of messages according to a numbered sequence of messages. An integration flow processing a particular message of the sequence may utilize a database connection to store data indicating the position of the message in the sequence. The integration flow may also utilize a database connection to access data describing other messages from the sequence that have been previously processed. Consider another example including one or more timer-based integration flows. A timer-based integration flow is an integration flow that may be scheduled to execute at a particular time and/or for a particular duration. Such a timer-based integration flow may utilize a database connection to access scheduling data indicating when the timer-based integration flow should execute. A timer-based integration flow may also utilize a database connection to write and/or access data describing the duration of the timer-based integration flow.

Database connections assigned to an integration flow worker may also be used by the various internal services of an integration flow worker. For example, an internal service monitoring the execution status and/or health of the integration flow worker may write results of its analysis to the database management system using a database connection. An internal service monitoring the execution of the timer for a timer-based integration flow may access data describing one or more timers using a database connection.

In various examples, integration flows and internal services of an integration flow worker may utilize database connections differently. Internal services may utilize database connections for operations at the database management system that take a comparatively short period of time. For example, an internal service monitoring the execution status or health of the integration flow worker may utilize a database connection to write data regarding the results of its analysis and then release the database connection. On the other hand, an integration flow may utilize a database connection for a comparatively longer period of time. For example, the timer-based integration flow example above may utilize a database connection for its execution duration, which may be considerably longer than the time to execute a single read or write operation or series of read and write operations.

Differing durations of database connection usage between internal services and integration flows creates challenges during the execution of the integration flow worker. For example, if the integration flow worker is implementing multiple integration flows concurrently, the integration flows may take and hold available database connections for relatively long periods of time. This may leave fewer database connections available for internal services. This may cause internal services to receive connection time out exceptions. In this way, the functions of the internal services may be compromised by delay. Degradation or delay in the tasks performed by the internal services may adversely affect the execution of the integration flow worker including, for example, affecting the execution of the various integration flows.

Various examples address these and other challenges utilizing an internal data source and an integration flow data source. The internal and integration flow data sources may be, for example, Java data sources utilizing a pool of Java Database Connectivity (JDBC) connections to one or more database management systems. The integration flow data source may comprise a pool of database connections that are available to the integration flows. The internal data source may comprise at least one database connection that is available to internal services. In this way, at least one database connection may be available for use by internal services. Because internal services may utilize database connections for a shorter duration, fewer database connections may be used for the internal services. In some examples, only a single database connection may be used for the internal services.

In some examples, the internal data source and integration flow data source may be logically implemented as components of a common name data source. In this way, integration flows and internal services may direct requests for database connections to the common name data source. The common name data source may direct appropriate connection requests to the internal or integration flow data source, depending on the initiator of the request.

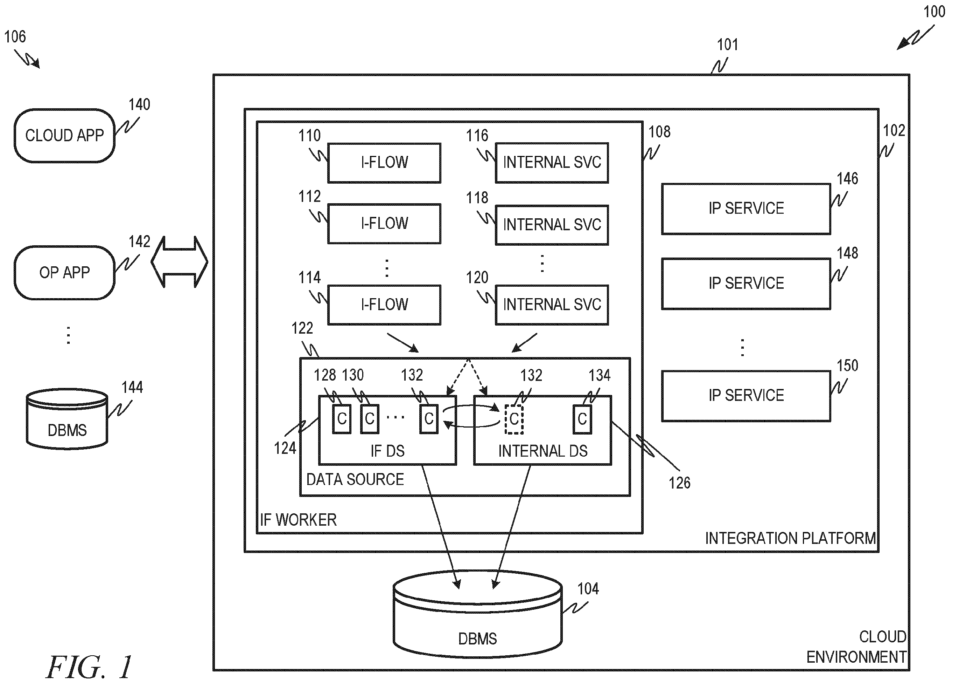

FIG. 1 is a diagram showing one example of an environment 100 comprising an integration platform 102, a database management system 104, and various sending and receiving software components 106. The integration platform 102 executes an example integration flow worker 108 including an integration flow data source 124 and an internal data source 126 managing connections 128, 130, 132, 134 to the database management system 104. The database management system 104 may execute at the cloud environment 101 utilizing processors, memory, and/or drive or other hardware storage devices provided by the cloud environment 101.

The integration platform 102 manages messaging between two or more software components, such as example software components 106. The example software components 106 include a cloud application 140, an on-premise executed application 142, and a DBMS 144. The cloud application 140 may be executed in a cloud environment such as, a public cloud environment or a private cloud environment. In some examples, the cloud application 140 is executed at the cloud environment 101, for example, at the tenancy implementing the integration platform 102 or a different tenancy, such as another tenancy held by the user enterprise for the integration platform 102. Although a single cloud application 140 is shown, it will be appreciated that the integration platform 102 may manage messaging for more than a single cloud application.

The on-premise application 142 is executed at an on-premise computing system. For example, an enterprise utilizing the on-premise application 142 may maintain one or more servers, network equipment components, and or the like to implement the on-premise computing system. The on-premise application 142 may be implemented by executing appropriate software at the on-premise computing system. Although a single on-premise application 142 is shown, it will be appreciated that the integration platform 102 may manage messaging for more than a single on-premise application.

The DBMS 144 may be implemented, for example, in a cloud environment and/or in an on-premise environment. The DBMS 144 may implement a database management system that may be associated with one or more client applications. In some examples, the DBMS 144 may be or include a database management system, such as the of S/4 HANA^{™}, SAP Concur^{®}, SAP Successfactors^{®}, SAP Data Warehouse Cloud, Inbound Document (IBD), available from SAP SE of Walldorf, Germany. Other examples of cloud-delivered data sources may include Structured Query Language (SQL) database services such as, for example, BigQuery^{®} available from Google, LLC of Mountain View, California, Sharepoint^{®} available from Microsoft Corporation of Redmond, Washington, various data storage products available from Salesforce, Inc. of San Francisco, California, and/or the like.

It will be appreciated that the software components 106 are examples of software components that can be managed by the integration platform 102. In many example systems, the integration platform 102 will manage messaging between combinations of more than the three example software components 106 shown and FIG. 1. Also, it will be appreciated that the types of example software components 106 shown in FIG. 1 are provided for example purposes and are not exhaustive. Other types of applications in other combinations may be managed by an integration platform.

The integration platform 102 may manage messaging for the various software components 106 utilizing integration flows implemented by integration flow workers, such as the integration flow worker 108. Although a single integration flow worker 108 is shown in FIG. 1, it will be appreciated that the integration platform 10 to may execute multiple integration flow workers (not shown in FIG. 1).

The integration flow worker 108 implements example integration flows 110, 112, 114. In some examples, the integration flows 110, 112, 114 are implemented as schemas or descriptions of how to process an inbound message or messages from a sending system and transform the message to a message that is readable by a receiving system. The integration flow worker 108 may launch the one or more integration flows 110, 112, 114, for example, in response to receiving corresponding incoming messages from a sending system.

Integration flows 110, 112, 114 may be configurable with parameters that control how the respective integration flows 110, 112, 114 perform integration with respect to two or more software components (e.g., one or more sending systems and one or more receiving systems). For example, any of the example software components 106 may be a sending system or a receiving system. In some examples, an integration flow 110, 112, 114 may have a maximum message size that can be processed. Reducing the maximum message size may decrease processing resources consumed by the integration flow 110, 112, 114 while performing integration tasks.

In some examples, integration flows 110, 112, 114 have one or more configurable parameters that relate to message throttling. For example, an integration flow 110, 112, 114 may be arranged to process messages serially, that is one at a time. In other arrangements, an integration flow 110, 112, 114 may be arranged to process messages in parallel. In some examples, the volume of messages that an integration flow 110, 112, 114 can process in parallel is further configurable. For example, an integration flow 110, 112, 114 may have a maximum number of messages that can be processed at the same time. Also, in some examples, an integration flow 110, 112, 114 may delay the beginning of a new message processing task until a threshold time has passed since the beginning of the previous message processing task. In various examples, an integration flow 110, 112, 114 may be modified to change parameters such as, whether it processes messages serially or in parallel, the number of messages that may be simultaneously processed in parallel, a threshold time period for beginning a new message processing task, and/or the like.

In some examples, an integration flow 110, 112, 114 may be configurable with respect to the type of adapter used to interface with example software components 106. An adapter used by an integration flow 110, 112, 114 may be a type of interface and/or process used by the integration flow 110, 112, 114 to communicate with the sender software component or components and the receiver software component or components. Different adapter types may consume different levels of resources at the cloud environment 101. For example, an adapter type that performs a validation of message syntax, such as a Simple Object Access Protocol (SOAP) may take more time and therefore consume more resources than another adapter that does not include such a validation. Accordingly, it may be possible to reduce the cloud environment resources used by an integration flow 110, 112, 114 by modifying the type of adapter used.

The integration flow worker 108 also executes various internal services 116, 118, 120. The internal services 116, 118, 120 may include executable code that executes concurrently with one or more of the integration flows 110, 112, 114 to manage the integration flows 110, 112, 114 as well as other aspects of the integration flow worker 108.

Different internal services 116, 118, 120 may perform different tasks related to the operation of the integration flow worker 108. For example, an internal service 116, 118, 120 may monitor the execution and/or health of the integration flow worker 108. For example, the internal service may periodically determine factors affecting the status and/or health of the integration flow worker 108. Factors measured by the internal service 116, 118, 120 may include metrics describing resources of the cloud environment 101 that are being consumed by the integration flow worker 108. For example, the internal service 116, 118, 120 may measure the public cloud environment memory being used by the integration flow worker 108, the public cloud environment processor resources being used by the integration flow worker 108, the public cloud environment network resources being used by the integration flow worker 108, and/or the like.

In some examples, an internal service 116, 118, 120 monitoring the status and/or health of the integration flow worker 108 may be configured to detect an error condition and respond with a remedial action. The remedial action may include reporting the state of the integration flow worker 108 to a service 146, 148, 150 of the integration platform wanted to, such as, for example, an orchestration service.

In some examples, the integration platform 102 is arranged according to a microservice architecture. In a microservice architecture, different portions of an application are implemented by a collection of loosely-coupled microservices executing at the cloud environment. Each microservice may include an executable that executes in a container implemented by the cloud environment 101. In a microservice architecture, each microservice is programmed to perform a defined task or small set of tasks and interact with the other microservices in a defined way, for example, according to an application programming interface (API). When the internal service 116, 118, 120 detects an error condition at the integration flow worker 108, it may notify a container orchestration service, such as, for example, a Kubernetes^{®} container orchestration system. The container orchestration service may respond by terminating the container implementing the integration flow worker 108 and launching a new integration flow worker 108 in a new container, e.g., from a common container image.

One or more of the internal services 116, 118, 120 may implement message relationship tracking. For example, some messages between software components 106 may be part of a set of common messages. A set of common messages may relate to a single transaction between software components 106, a set of related transactions between software components 106, and/or the like. For example, an internal service 116, 118, 120 may detect that an incoming message is part of a set of common messages. The internal service 116, 118, 120 may access the database management system 104 to determine if another integration flow at the integration flow worker 108 or another integration flow worker has already processed one or more messages from the set of common messages. If another integration flow has already processed one or more messages from the set of common messages, the internal service 116, 118, 120 may transfer the incoming message to that integration flow. If no other integration flow has already processed one or more messages from the set of common messages, the internal service 116, 118, 120 may assign the message to an integration flow 110, 112, 114 (and/or launch a new integration flow 110, 112, 114 for the message). The internal service 116, 118, 120 may also write data to the database management system 104 indicating the set of common messages and an indication of the integration flow 110, 112, 114 that is handling the messages.

One or more of the internal services 116, 118, 120, in some examples, may acquire and/or release locks at the database management system 104, for example, on behalf of the integration flows 110, 112, 114. For example, one or more of the integration flows 110, 112, 114 may process messages that are part of a transaction including multiple messages. Records of the transaction may be stored at the database management system 104. When an integration flow 110, 112, 114 is processing a message or set of multiple messages that are part of a transaction, that integration flow 110, 112, 114 may utilize a lock that prevents a corresponding portion of the database management system 104 from being read or written to by other components. In some examples, the integration flow 110, 112, 114 may be configured to request the lock from an internal service 116, 118, 120. When the integration flow 110, 112, 114 has finished its transaction, the internal service 116, 118, 120 may release the lock.

One or more of the internal services 116, 118, 120, in some examples, is configured to manage one or more timers related to the integration flows 110, 112, 114. For example, one or more of the integration flows 110, 112, 114 may be a timer-based integration flow that is scheduled to executed a particular time and/or for a particular duration. The internal service 116, 118, 120 may implement a timer and periodically write a status of the timer to the database management system 104. In some examples, the internal service 116, 118, 120 may read a status of the timer from the database management system 104.

One or more of the internal services 116, 118, 120, in some examples, is configured to manage number ranges associated with incoming messages. In some examples when messages are part of a common set of messages relating to a common transaction, the messages of the transaction are numbered according to a sequence. The internal service 116, 118, 120 may detect the receipt of each message of the sequence and may write an indication of the messages been received to the database management system 104.

In addition to one or more integration flow workers, such as the integration flow worker 108, the integration platform 102 may execute various other services 146, 148, 150. Services 146, 148, 150 may support the execution of various integration flows by the various integration flow workers. In some examples, the services 146, 148, 150 may include an orchestration service for orchestrating the spinning up and spinning down of various integration flow workers 108. Also, in some examples, the services 146, 148, 150 may include an integration flow design application. An integration flow design application may be accessible by a user of the user enterprise to design and/or modify one or more integration flows.

As described herein, integration flows 110, 112, 114 and internal services 116, 118, 120 may utilize the database management system 104. To facilitate use of the database management system 104, the integration flow worker 108 may execute an integration flow data source 124 and an internal data source 126. The integration flow data source 124 and internal data source 126 may be or include any suitable type of data source such as, for example, a Java data source implemented to manage a pool of database connections 128, 130, 132, 134. The database connections 128, 130, 132, 134, in some examples, are JDBC connections.

In some examples, the integration flows 110, 112, 114 and internal services 116, 118, 120 may direct connection requests to a common name data source 122. The common name data source 122 may be programmed to direct connection requests to either the integration flow data source 124 or the internal data source 126, depending on the source of the request. In some examples, the internal services 116, 118, 120 are programmed to make connection requests that incorporate an indication that the connection request is from an internal service 116, 118, 120. The data source 122 may utilize the indication, or lack thereof, to distribute connection requests to either the integration flow data source 124 or the internal data source 126.

The integration flow data source 124 may utilize an integration flow pool of connections 128, 130, 132 to the database management system 104. For example, when the integration flow data source 124 receives a connection request (e.g., from an integration flow 110, 112, 114), the integration flow data source 124 may determine whether one or more of the connections 128, 130, 132 is available. If a connection is available, the integration flow data source 124 may assign the connection to the requesting integration flow 110, 112, 114. The requesting integration flow 110, 112, 114 may utilize the assigned connection according to its processing. For example, the requesting integration flow 110, 112, 114 may execute one or more queries or other operations at the database management system 104 utilizing the assigned connection 128, 130, 132. The one or more operations may include, for example, a read operation, a write operation, and/or the like. When the requesting integration flow 110, 112, 114 has completed its use of the database management system 104, it may return its assigned connection to the integration flow pool of connections managed by the integration flow data source 124.

The internal data source 126 may utilize a reserved connection 134. In some examples, the reserved connection 134 is part of a common pool of connections utilized by both the integration flow data source 124 and internal data source 126. In this example, the reserved connection 134 may not be assignable by the integration flow data source 124 to an integration flow 110, 112, 114. For example, the reserved connection 134 may not be assignable by the integration flow data source 124. The reserved connection 134 may be a single connection from a common pool of connections including the connections 128, 130, 132, 134. In other examples, the reserved connection is implemented by ensuring that at least one connection of a common pool of connections including the connections 128, 130, 132, 134 is either assigned to an internal service 116, 118, 120 or available to be assigned to the internal service 116, 118, 120.

When the common name data source 122 receives a connection request that is from an internal service 116, 118, 120, it may route the connection request to the internal data source 126. The internal data source 126 may determine if the reserved connection 134 is available. If the reserved connection 134 is available, the internal data source 126 may assign the reserved connection 134 to the requesting internal service 116, 118, 120. The requesting internal service 116, 118, 120 may utilize the reserved connection 134. Utilizing the reserved connection 134 may include, executing an operation at the database management system 104 such as, for example, a read operations and/or a write operation. After utilizing the reserved connection 134, the requesting internal service 116, 118, 120 may release the reserved connection 134 it to the internal data source 126 to be assigned again.

In some examples, the internal data source 126 may be programmed to borrow one or more connections 132 from the integration flow data source 124. In the example of FIG. 1, the connection 132 is part of a integration flow pool of connections 128, 130, 132 that is managed by the integration flow data source 124. The connection 132, indicated by the dotted box, has been borrowed by the internal data source 126. For example, if the internal data source 126 receives a connection request from an internal service 116, 118, 120, and the reserved connection 134 is not available, the internal data source 126 may, in some circumstances, assign a connection from the integration flow pool of connections 128, 130, 132 managed by the integration flow data source 124. For example, the internal data source 126 may determine if the state of the pool of connections 128, 130, 132 of the integration flow data source 124 meets one or more threshold conditions. In some examples, the threshold condition or conditions may be related to usage of the integration flow pool of connections 128, 130, 132 managed by the integration flow data source 124. For example, if less than a threshold portion of the pool of connections 128, 130, 132 is currently utilized, then the internal data source 126 may assign one of the connections 128, 130, 132 to a requesting internal service 116, 118, 120. The threshold portion may be, for example, 50%, 55%, 60%, 65%, 70%, 75%, 80%, 85%, 90%, 95%, and/or the like.

When a connection from the integration flow pool of connections 128, 130, 132 managed by the integration flow data source 124 is assigned to an internal service 116, 118, 120, the internal service 116, 118, 120 may utilize the connection to perform one or more queries or other operations at the database management system 104. After using the assigned connection 128, 130, 132, the internal service 116, 118, 120 releases the assigned connection 128, 130, 132. When the internal service 116, 118, 120 releases the connection 128, 130, 132, it may be returned to the integration flow pool of connections 128, 130, 132 managed by the integration flow data source 124.

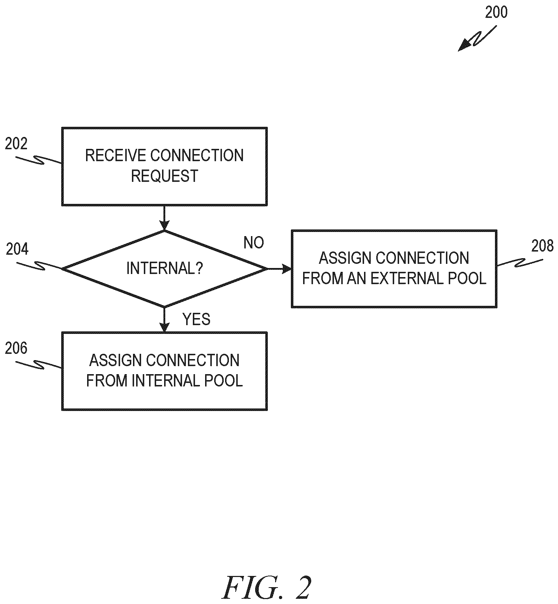

FIG. 2 is a flowchart showing one example of a process flow 200 that may be performed by the integration flow worker 108 to process a connection request from an integration flow 110, 112, 114 or internal service 116, 118, 120 to access the database management system 104. At operation 202, a connection request may be received. The connection request may originate from an integration flow 110, 112, 114 or from an internal service 116, 118, 120.

At operation 204, the integration flow worker 108 (e.g., the common name data source 122 thereof) determines whether the received connection request is an internal connection request from an internal service 116, 118,120 or an integration flow connection request from an integration flow 110, 112, 114.

In some examples, the connection request is marked to indicate whether it originated from an integration flow1 10, 112, 114 or from an internal service 116, 118, 120. In some examples, the internal services 116, 118, 120 are arranged to mark connection requests with an indication that the connection request originates from an internal service 116, 118, 120. For example, the internal service 116, 118, 120 may set a flag or otherwise incorporate into the connection request data indicating that the connection request originates from an internal service 116, 118, 120. In some examples, integration flows 110, 112, 114 are also arranged to mark connection requests as originating from an integration flow. In other examples, either the integration flows or the internal services mark connection requests. In these examples, the data source 122 may determine that marked requests are to be directed to one of the data sources 124, 126 and unmarked requests are to be directed to the other data sources 124, 126.

If the received connection request is from an integration flow 110, 112, 114, the data source 122 may route the connection request to the integration flow data source 124. At operation 206, the integration flow data source 124 may assign to the requesting integration flow 110, 112, 114 a connection from the pool of connections 128, 130, 132, if such a connection is available. On the other hand, if the received connection request is from an internal service 116, 118, 120, then the data source 122 may route the connection request to the internal data source 126. At operation 208, the internal data source 126 may assign the reserved connection 134 to the internal service 116, 118, 120, if the reserved connection is available.

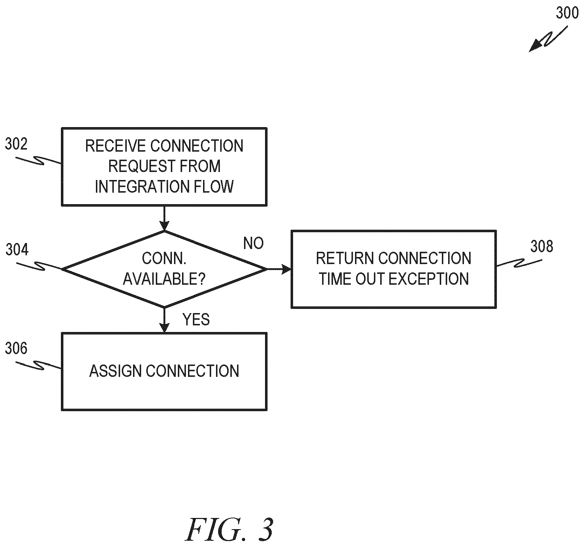

FIG. 3 is a flowchart showing one example of a process flow 300 that may be executed by the integration flow worker 108 (e.g. the integration flow data source 124 thereof) upon receipt of a connection request from an integration flow 110, 112, 114. For example, the process flow 300 shows an example way for implementing the operation 208 of the process flow 200. At operation 302, the integration flow data source 124 may receive a connection request from an integration flow 110, 112, 114. The connection request may have been routed to the integration flow data source 124 by the common name data source 122.

At operation 304, the integration flow data source 124 may determine if any connections from the pool of connections 128, 130, 132 are available to be assigned. A connection may be available to be assigned if it is not being used by another integration flow 110, 112, 114 or internal service 116, 118, 120. If at least one connection from the pool of connections 128, 130, 132 is available, the integration flow data source 124 may, at operation 306, assign the connection to the requesting integration flow 110, 112, 114. The requesting integration flow may execute an operation, such as a query or queries at the database management system 104 using the assigned connection. Upon completing its use of the connection, the requesting integration flow 110, 112, 114 may return the connection to the integration flow data source 124, making the connection available for assigning to another integration flow 110, 112, 114 or internal service 116, 118, 120.

If, at operation 304, the integration flow data source 124 determines that none of the connections of the pool of connections 128, 130, 132 are available, then the integration flow data source 124 may, at operation 308, return to the requesting integration flow 110, 112, 114, a connection time out exception. The connection time out exception may include data indicating to the requesting integration flow 110, 112, 114 that no connections are available. In some examples, the requesting integration flow 110, 112, 114 may again request a connection at a later time.

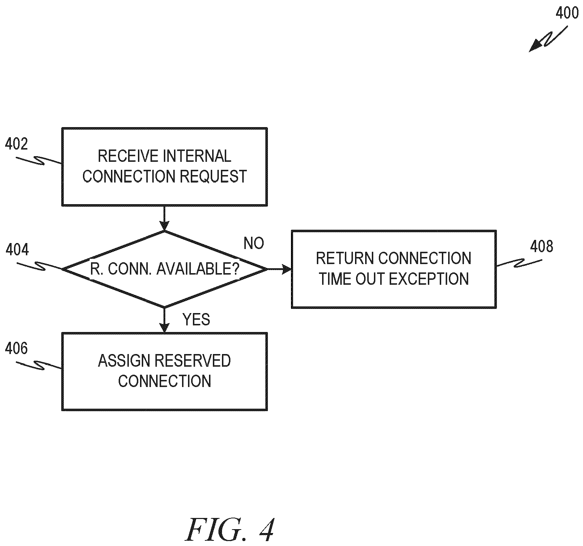

FIG. 4 is a flowchart showing one example of a process flow 400 that may be executed by the integration flow worker 108 (e.g. the internal data source 126 thereof) upon receipt of a connection request from an internal service 116, 118, 120. At operation 402, the internal data source 126 may receive a connection request from an internal service 116, 118, 120. The connection request may have been routed to the integration flow data source 124 by the common name data source 122.

At operation 404, the internal data source 126 may determine if the reserved connection 134 is available to be assigned. The reserved connection may be available if it has not been assigned to another internal service 116, 118, 120. If the reserved connection 134 is available, the internal data source 126 may, at operation 406, assign the reserved connection 134 to the requesting internal service 116, 118, 120. The requesting internal service 116, 118, 120 may execute an operation, such as a query or queries at the database management system 104 using the assigned connection. Upon completion of the query or queries, the requesting internal service 116, 118, 120 may return the reserved connection 134 to the internal data source 126.

If, at operation 404, the internal data source 126 determines that the reserved connection 134 is not available, then the internal data source 126 may, at operation 408, return to the requesting internal service 116, 118, 120, a connection time out exception. The connection time out exception may include data indicating to the requesting internal service 116, 118, 120 that no connection is available. In some examples, the requesting internal service 116, 118, 120 may again request a connection at a later time.

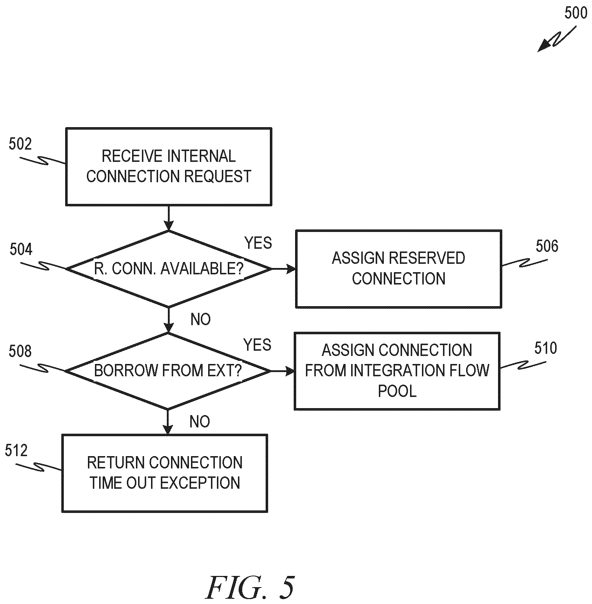

FIG. 5 is a flowchart showing one example of a process flow 500 that may be executed by executed by the integration flow worker 108 (e.g. the internal data source 126 thereof) upon receipt of a connection request from an internal service 116, 118, 120. In the example of FIG. 5, the internal data source 126 may borrow a connection from the pool of connections 128, 130, 132 in the event that the reserved connection 134 is unavailable and one or more threshold conditions are met.

At operation 502, the internal data source 126 may receive a connection request from an internal service 116, 118, 120. The connection request may have been routed to the integration flow data source 124 by the common name data source 122. At operation 504, the internal data source 126 may determine if the reserved connection 134 is available to be assigned. The reserved connection may be available if it is not being used by another internal service 116, 118, 120. If the reserved connection 134 is available, the internal data source 126 may, at operation 506, assign the reserved connection 134 to the requesting internal service 116, 118, 120. The requesting internal service 116, 118, 120 may execute an operation, such as a query or queries at the database management system 104 using the assigned connection. Upon completion of the query or queries, the requesting internal service 116, 118, 120 may return the reserved connection 134 to the internal data source 126.

If, at operation 504, the internal data source 126 determines that the reserved connection 134 is not available, then the internal data source 126 may determine, at operation 508, whether to borrow a connection from the pool of connections 128, 130, 134 managed by the integration flow data source 124. This may include, for example, determining if one or more threshold conditions are met. The threshold conditions may include, for example, whether a threshold portion of the integration flow pool of connections 128, 130, 132 managed by the integration flow data source 124 is available.

If the internal data source 126 determines not to borrow a connection from the integration flow data source 124, then the internal data source may, at operation 512, return a connection time out exception to the requesting internal service 116, 118, 120. If the internal data source 126 determines to borrow a connection from the integration flow data source 124, then it may, at operation 510, assign a connection from the pool of connections 128, 130, 132 to the requesting internal service 116, 118, 120. The requesting internal service 116, 118, 120 may execute an operation, such as a query or queries at the database management system 104 using the assigned connection. Upon completion of the query or queries, the requesting internal service 116, 118, 120 may return the assigned connection to the integration flow pool of connections 128, 130, 132 managed by the integration flow data source 124. The integration flow data source 124 may go on utilizing the returned connection for assignment to integration flows 110, 112, 114, for example, as described with respect to FIG. 3.

### Examples:

In view of the disclosure above, various examples are set forth below. It should be noted that one or more features of an example, taken in isolation or combination, should be considered within the disclosure of this application.

Example 1 is an integration platform system comprising: at least one computing device implementing a cloud environment, the at least one computing device being programmed to execute: a database management system; and an integration flow worker, the integration flow worker comprising: an integration flow data source that is assigned an integration flow connection pool comprising a plurality of connections to the database management system; an internal data source that is assigned a reserved connection to the database management system; an internal service; and a plurality of integration flows, a first integration flow of the plurality of integration flows configured to interface at least one message between a first software component and a second software component; and the integration flow worker being programmed to perform operations comprising: receiving, from the first integration flow, a first connection request for the database management system; assigning a first connection from the integration flow connection pool to the first integration flow; receiving, from the internal service, a second connection request describing a second operation to be performed at the database management system; and assigning the reserved connection to the internal service.

In Example 2, the subject matter of Example 1 optionally includes the integration flow data source and the internal data source being accessible to the plurality of integration flows and the internal service via a common name data source.

In Example 3, the subject matter of Example 2 optionally includes the first connection request indicating that it is sent to the common name data source.

In Example 4, the subject matter of any one or more of Examples 1-3 optionally includes the operations further comprising: receiving, from the internal service, a third connection; determining that the reserved connection to the database management system is unavailable; determining that the integration flow connection pool meets a threshold condition; and responsive to determining that the integration flow connection pool meets a threshold condition, assigning a connection of the integration flow connection pool to the internal service.

In Example 5, the subject matter of Example 4 optionally includes the determining that the integration flow connection pool meets the threshold condition comprising determining that less than a threshold portion of the plurality of connections of the integration flow connection pool are being used.

In Example 6, the subject matter of any one or more of Examples 4-5 optionally includes the operations further comprising, after assigning the connection of the integration flow connection pool, returning the connection to the integration flow connection pool.

In Example 7, the subject matter of any one or more of Examples 1-6 optionally includes the internal service being programmed to perform operations comprising generating the second connection request.

In Example 8, the subject matter of Example 7 optionally includes the generating of the second connection request by the internal service comprising incorporating with the second connection request an indication that the second connection request is from an internal service.

In Example 9, the subject matter of any one or more of Examples 1-8 optionally includes the internal service utilizing the reserved connection to perform an operation at the database management system comprising at least one of: a request to write data describing performance of the integration flow worker; a request to write data regarding a relationship between a message received by at least one of the plurality of integration flows; a request to at the database management system; or a request describing a state of a timer.

Example 10 is a method of executing an integration platform, the integration platform comprising an executable integration flow worker for implementing a plurality of integration flows, the method comprising: receiving, from a first integration flow of the plurality of integration flows, a first connection request for a database management system in communication with the integration flow worker, the first integration flow configured to interface at least one message between a first software component and a second software component, the integration flow worker comprising an integration flow data source that is assigned an integration flow connection pool comprising a plurality of connections to the database management system and an internal data source that is assigned a reserved connection to the database management system; assigning a first connection from the integration flow connection pool to the first integration flow; receiving, from an internal service of the integration flow worker, a second connection request for the database management system; and assigning the reserved connection to the internal service.

In Example 11, the subject matter of Example 10 optionally includes the integration flow data source and the internal data source being accessible to the plurality of integration flows and the internal service via a common name data source.

In Example 12, the subject matter of Example 11 optionally includes the first connection request indicating that it is sent to the common name data source.

In Example 13, the subject matter of any one or more of Examples 10-12 optionally includes receiving, from the internal service, a third connection request describing a third operation to be performed at the database management system; determining that the reserved connection to the database management system is unavailable; determining that the integration flow connection pool meets a threshold condition; and responsive to determining that the integration flow connection pool meets a threshold condition, executing the third operation using a connection of the integration flow connection pool.

In Example 14, the subject matter of Example 13 optionally includes the determining that the integration flow connection pool meets the threshold condition comprising determining that less than a threshold portion of the plurality of connections of the integration flow connection pool are being used.

In Example 15, the subject matter of any one or more of Examples 13-14 optionally includes after executing the third operation using the connection of the integration flow connection pool, returning the connection to the integration flow connection pool.

In Example 16, the subject matter of any one or more of Examples 10-15 optionally includes the internal service being programmed to perform operations comprising generating the second connection request.

In Example 17, the subject matter of Example 16 optionally includes the generating of the second connection request by the internal service comprising incorporating with the second connection request an indication that the second connection request is from an internal service.

In Example 18, the subject matter of any one or more of Examples 10-17 optionally includes the internal service utilizing the reserved connection to perform an operation at the database management system comprising at least one of: a request to write data describing performance of the integration flow worker; a request to write data regarding a relationship between a message received by at least one of the plurality of integration flows; a request to at the database management system; or a request describing a state of a timer.

Example 19 is a non-transitory machine-readable medium comprising instructions thereon that, when executed by at least one processor, cause the at least one processor to execute an integration platform, the integration platform comprising an executable integration flow worker for implementing a plurality of integration flows, the executing of the integration platform comprising: receiving, from a first integration flow of the plurality of integration flows, a first connection request for a database management system in communication with the integration flow worker, the first integration flow configured to interface at least one message between a first software component and a second software component, the integration flow worker comprising an integration flow data source that is assigned an integration flow connection pool comprising a plurality of connections to the database management system and an internal data source that is assigned a reserved connection to the database management system; assigning a first connection from the integration flow connection pool to the first integration flow; receiving, from an internal service of the integration flow worker, a second connection request for the database management system; and assigning the reserved connection to the internal service.

In Example 20, the subject matter of Example 19 optionally includes the integration flow data source and the internal data source being accessible to the plurality of integration flows and the internal service via a common name data source.

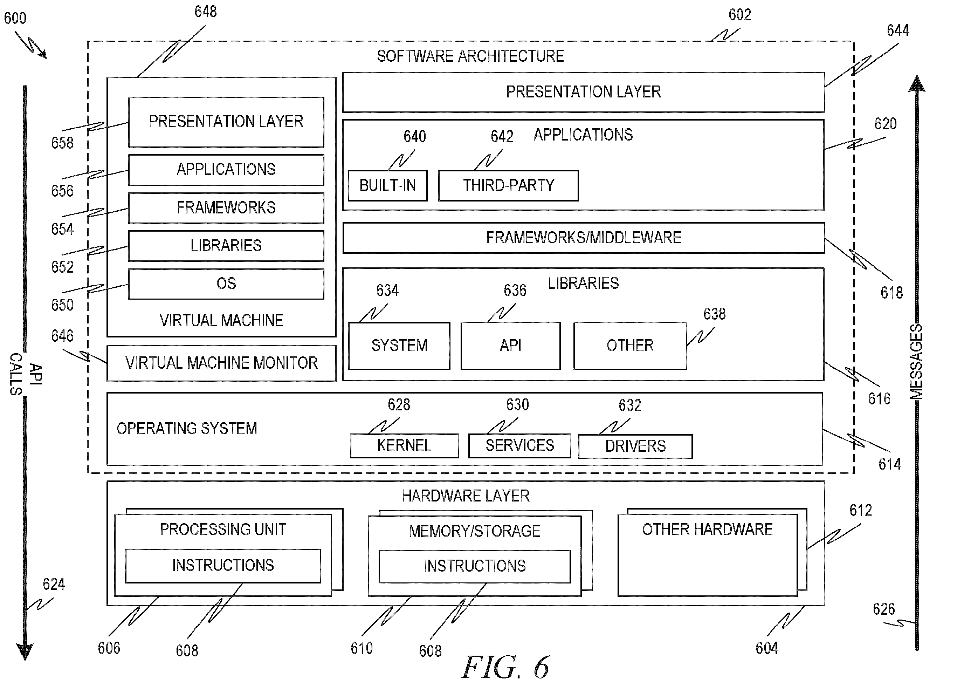

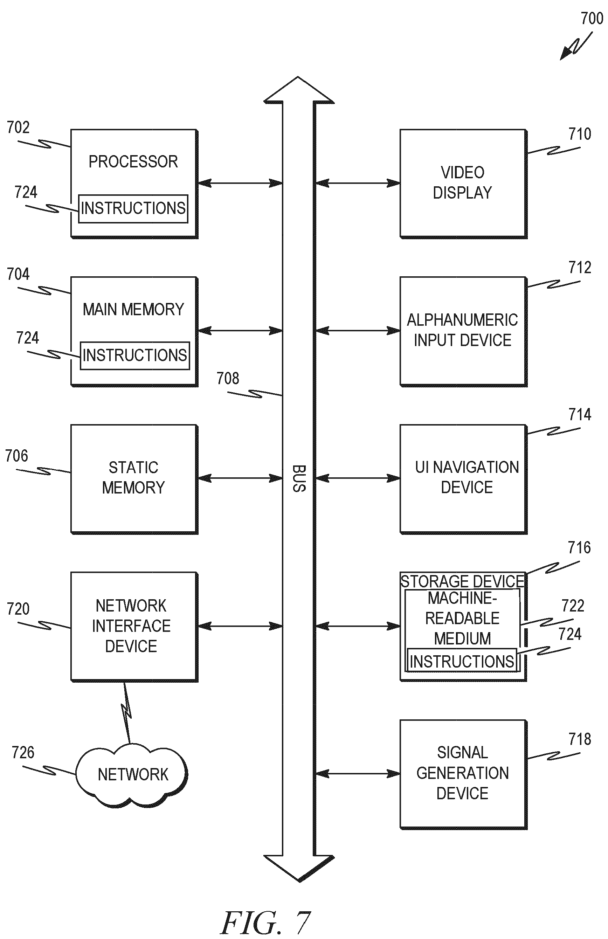

FIG. 6 is a block diagram 600 showing one example of a software architecture 602 for a computing device. The architecture 602 may be used in conjunction with various hardware architectures, for example, as described herein. FIG. 6 is merely a non-limiting example of a software architecture and many other architectures may be implemented to facilitate the functionality described herein. A representative hardware layer 604 is illustrated and can represent, for example, any of the above referenced computing devices. In some examples, the hardware layer 604 may be implemented according to the architecture of the computer system of FIG. 7.

The representative hardware layer 604 comprises one or more processing units 606 having associated executable instructions 608. Executable instructions 608 represent the executable instructions of the software architecture 602, including implementation of the methods, modules, subsystems, and components, and so forth described herein and may also include memory and/or storage modules 610, which also have executable instructions 608. Hardware layer 604 may also comprise other hardware as indicated by other hardware 612 which represents any other hardware of the hardware layer 604, such as the other hardware illustrated as part of the architecture 602.

In the example architecture of FIG. 6, the software architecture 602 may be conceptualized as a stack of layers where each layer provides particular functionality. For example, the software architecture 602 may include layers such as an operating system 614, libraries 616, middleware layer 618, applications 620, and presentation layer 644. Operationally, the applications 620 and/or other components within the layers may invoke API calls 624 through the software stack and access a response, returned values, and so forth illustrated as messages 626 in response to the API calls 624. The layers illustrated are representative in nature and not all software architectures have all layers. For example, some mobile or special purpose operating systems may not provide a middleware layer 618, while others may provide such a layer. Other software architectures may include additional or different layers.

The operating system 614 may manage hardware resources and provide common services. The operating system 614 may include, for example, a kernel 628, services 630, and drivers 632. The kernel 628 may act as an abstraction layer between the hardware and the other software layers. For example, the kernel 628 may be responsible for memory management, processor management (e.g., scheduling), component management, networking, security settings, and so on. The services 630 may provide other common services for the other software layers. In some examples, the services 630 include an interrupt service. The interrupt service may detect the receipt of an interrupt and, in response, cause the architecture 602 to pause its current processing and execute an interrupt service routine (ISR) when an interrupt is accessed.

The drivers 632 may be responsible for controlling or interfacing with the underlying hardware. For instance, the drivers 632 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 616 may provide a common infrastructure that may be utilized by the applications 620 and/or other components and/or layers. The libraries 616 typically provide functionality that allows other software modules to perform tasks in an easier fashion than to interface directly with the underlying operating system 614 functionality (e.g., kernel 628, services 630 and/or drivers 632). The libraries 616 may include system 634 libraries (e.g., C standard library) that may provide functions such as memory allocation functions, string manipulation functions, mathematic functions, and the like. In addition, the libraries 616 may include API libraries 636 such as media libraries (e.g., libraries to support presentation and manipulation of various media format such as MPEG4, H.264, MP3, AAC, AMR, JPG, PNG), graphics libraries (e.g., an OpenGL framework that may be used to render 2D and 3D in a graphic content on a display), database libraries (e.g., SQLite that may provide various relational database functions), web libraries (e.g., WebKit that may provide web browsing functionality), and the like. The libraries 616 may also include a wide variety of other libraries 638 to provide many other APIs to the applications 620 and other software components/modules.

The middleware layer 618 (also sometimes referred to as frameworks) may provide a higher-level common infrastructure that may be utilized by the applications 620 and/or other software components/modules. For example, the middleware layer 618 may provide various graphic user interface (GUI) functions, high-level resource management, high-level location services, and so forth. The middleware layer 618 may provide a broad spectrum of other APIs that may be utilized by the applications 620 and/or other software components/modules, some of which may be specific to a particular operating system or platform.

The applications 620 includes built-in applications 640 and/or third-party applications 642. Examples of representative built-in applications 640 may include, but are not limited to, a contacts application, a browser application, a book reader application, a location application, a media application, a messaging application, and/or a game application. Third-party applications 642 may include any of the built-in applications 640 as well as a broad assortment of other applications. In a specific example, the third-party application 642 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 642 may invoke the API calls 624 provided by the mobile operating system such as operating system 614 to facilitate functionality described herein.

The applications 620 may utilize built-in operating system functions (e.g., kernel 628, services 630 and/or drivers 632), libraries (e.g., system 634, API libraries 636, and other libraries 638), and middleware layer 618 to create user interfaces to interact with users of the system. Alternatively, or additionally, in some systems, interactions with a user may occur through a presentation layer, such as presentation layer 644. In these systems, the application/module "logic" can be separated from the aspects of the application/module that interact with a user.

Some software architectures utilize virtual machines. In the example of FIG. 6, this is illustrated by virtual machine 648. A virtual machine creates a software environment where applications/modules can execute as if they were executing on a hardware computing device. A virtual machine is hosted by a host operating system (operating system 614) and typically, although not always, has a virtual machine monitor 646, which manages the operation of the virtual machine as well as the interface with the host operating system (i.e., operating system 614). A software architecture executes within the virtual machine such as an operating system 650, libraries 652, frameworks/middleware 654, applications 656 and/or presentation layer 658. These layers of software architecture executing within the virtual machine 648 can be the same as corresponding layers previously described or may be different.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. In example embodiments, one or more computer systems (e.g., a standalone, client, or server computer system) or one or more hardware processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses that connect the hardware-implemented modules). In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment, or a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

Example embodiments may be implemented in digital electronic circuitry, or in computer hardware, firmware, or software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

FIG. 7 is a block diagram of a machine in the example form of a computer system 700 within which instructions 724 may be executed for causing the machine to perform any one or more of the methodologies discussed herein. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processor 702 (e.g., a central processing unit (CPU), a graphics processing unit (GPU), or both), a main memory 704, and a static memory 706, which communicate with each other via a bus 708. The computer system 700 may further include a video display unit 710 (e.g., a liquid crystal display (LCD) or a cathode ray tube (CRT)). The computer system 700 also includes an alphanumeric input device 712 (e.g., a keyboard or a touch-sensitive display screen), a user interface (UI) navigation (or cursor control) device 714 (e.g., a mouse), a disk drive unit 716, a signal generation device 718 (e.g., a speaker), and a network interface device 720.

### MACHINE-READABLE MEDIUM

The disk drive unit 716 includes a machine-readable medium 722 on which is stored one or more sets of data structures and instructions 724 (e.g., software) embodying or utilized by any one or more of the methodologies or functions described herein. The instructions 724 may also reside, completely or at least partially, within the main memory 704 and/or within the processor 702 during execution thereof by the computer system 700, with the main memory 704 and the processor 702 also constituting machine-readable media 722.

While the machine-readable medium 722 is shown in an example embodiment to be a single medium, the term "machine-readable medium" may include a single medium or multiple media (e.g., a centralized or distributed database, and/or associated caches and servers) that store the one or more instructions 724 or data structures. The term "machine-readable medium" shall also be taken to include any tangible medium that is capable of storing, encoding, or carrying instructions 724 for execution by the machine and that cause the machine to perform any one or more of the methodologies of the present disclosure, or that is capable of storing, encoding, or carrying data structures utilized by or associated with such instructions 724. The term "machine-readable medium" shall accordingly be taken to include, but not be limited to, solid-state memories, and optical and magnetic media. Specific examples of machine-readable media 722 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and CD-ROM and DVD-ROM disks.

### TRANSMISSION MEDIUM

The instructions 724 may further be transmitted or received over a communications network 726 using a transmission medium. The instructions 724 may be transmitted using the network interface device 720 and any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 724 for execution by the machine, and includes digital or analog communications signals or other intangible media to facilitate communication of such software.

Although an embodiment has been described with reference to specific example embodiments, it will be evident that various modifications and changes may be made to these embodiments without departing from the broader spirit and scope of the disclosure. Accordingly, the specification and drawings are to be regarded in an illustrative rather than a restrictive sense. The accompanying drawings that form a part hereof show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

## Claims

1. An integration platform system comprising: at least one computing device implementing a cloud environment, the at least one computing device being programmed to execute:
a database management system; and
an integration flow worker, the integration flow worker comprising:
an integration flow data source that is assigned an integration flow connection pool comprising a plurality of connections to the database management system;
an internal data source that is assigned a reserved connection to the database management system;
an internal service; and
a plurality of integration flows, a first integration flow of the plurality of integration flows configured to interface at least one message between a first software component and a second software component; and
the integration flow worker being programmed to perform operations comprising:
receiving, from the first integration flow, a first connection request for the database management system;
assigning a first connection from the integration flow connection pool to the first integration flow;
receiving, from the internal service, a second connection request describing a second operation to be performed at the database management system; and
assigning the reserved connection to the internal service.

2. The integration platform system of claim 1, the integration flow data source and the internal data source being accessible to the plurality of integration flows and the internal service via a common name data source; and optionally, the first connection request indicating that it is sent to the common name data source.

3. The integration platform system of claim 1 or 2, the operations further comprising:
receiving, from the internal service, a third connection;
determining that the reserved connection to the database management system is unavailable;
determining that the integration flow connection pool meets a threshold condition; and
responsive to determining that the integration flow connection pool meets a threshold condition, assigning a connection of the integration flow connection pool to the internal service.

4. The integration platform system of claim 3, the determining that the integration flow connection pool meets the threshold condition comprising determining that less than a threshold portion of the plurality of connections of the integration flow connection pool are being used.

5. The integration platform system of claim 3 or 4, the operations further comprising, after assigning the connection of the integration flow connection pool, returning the connection to the integration flow connection pool.

6. The integration platform system of any one of claims 1 to 5, the internal service being programmed to perform operations comprising generating the second connection request; and
optionally, the generating of the second connection request by the internal service comprising incorporating with the second connection request an indication that the second connection request is from an internal service.

7. The integration platform system of any one of claims 1 to 6, the internal service utilizing the reserved connection to perform an operation at the database management system comprising at least one of: a request to write data describing performance of the integration flow worker; a request to write data regarding a relationship between a message received by at least one of the plurality of integration flows; a request to at the database management system; or a request describing a state of a timer.

8. A method of executing an integration platform, the integration platform comprising an executable integration flow worker for implementing a plurality of integration flows, the method comprising:
receiving, from a first integration flow of the plurality of integration flows, a first connection request for a database management system in communication with the integration flow worker, the first integration flow configured to interface at least one message between a first software component and a second software component, the integration flow worker comprising an integration flow data source that is assigned an integration flow connection pool comprising a plurality of connections to the database management system and an internal data source that is assigned a reserved connection to the database management system;
assigning a first connection from the integration flow connection pool to the first integration flow;
receiving, from an internal service of the integration flow worker, a second connection request for the database management system; and
assigning the reserved connection to the internal service.

9. The method of claim 8, the integration flow data source and the internal data source being accessible to the plurality of integration flows and the internal service via a common name data source; and
optionally, the first connection request indicating that it is sent to the common name data source.

10. The method of claim 8 or 9, further comprising:
receiving, from the internal service, a third connection request describing a third operation to be performed at the database management system;
determining that the reserved connection to the database management system is unavailable;
determining that the integration flow connection pool meets a threshold condition; and
responsive to determining that the integration flow connection pool meets a threshold condition, executing the third operation using a connection of the integration flow connection pool.

11. The method of claim 10, the determining that the integration flow connection pool meets the threshold condition comprising determining that less than a threshold portion of the plurality of connections of the integration flow connection pool are being used.

12. The method of claim 10 or 11, further comprising, after executing the third operation using the connection of the integration flow connection pool, returning the connection to the integration flow connection pool.

13. The method of any one of claims 8 to 12, the internal service being programmed to perform operations comprising generating the second connection request; and
optionally, the generating of the second connection request by the internal service comprising incorporating with the second connection request an indication that the second connection request is from an internal service.

14. The method of any one of claims 8 to 13, the internal service utilizing the reserved connection to perform an operation at the database management system comprising at least one of: a request to write data describing performance of the integration flow worker; a request to write data regarding a relationship between a message received by at least one of the plurality of integration flows; a request to at the database management system; or a request describing a state of a timer.

15. A non-transitory machine-readable medium comprising instructions thereon that, when executed by at least one processor, cause the at least one processor to execute an integration platform, the integration platform comprising an executable integration flow worker for implementing a plurality of integration flows, the executing of the integration platform comprising the method of any one of claims 8 to 14.
